# EUROPÄISCHE PATENTSCHRIFT

(11) **EP 0 802 079 B1**
(45) Veröffentlichungstag und Bekanntmachung des Hinweises auf die Patenterteilung: **30.05.2001**
(21) Anmeldenummer: 97106034.8
(22) Anmeldetag: 12.04.1997
(51) Int. Cl.: B60K 37/02, G07C 5/12, B60K 35/00, G01P 1/02, G07C 7/00

(54) **Tachometer für Kraftfahrzeuge**
Tachometer for motor vehicles
Tachymètre pour des automobiles

(30) Priorität: 17.04.1996 DE 29606943 U
(43) Veröffentlichungstag der Anmeldung: 22.10.1997
(73) Patentinhaber: Mannesmann VDO AG, 60326 Frankfurt (DE)
(72) Erfinder: Schleicher, Helmut, 78073 Bad Dürrheim (DE); Zimmermann, Hans, Dipl.-Ing. (FH), 78054 Villingen-Schwenningen (DE)

(56) Entgegenhaltungen:
- EP-A- 0 077 994
- EP-A- 0 079 571
- EP-A- 0 114 396
- DE-A- 3 132 394
- DE-B- 1 268 889

## Beschreibung

Die Erfindung betrifft einen Tachometer für Kraftfahrzeuge, welcher einen Einbau in eine in einem Armaturenbrett oder dergleichen Fahrzeugwand vorgesehene Öffnung gestattet, die für den Einbau eines Fahrtschreibers mit einem im wesentlichen zylindrischen Gehäuse und einem frontseitig aufklappbaren und mittels eines Schlosses mit dem Gehäuse verriegelbaren, dem Wechseln der in einem derartigen Fahrtschreiber als Aufzeichnungsträger vorgesehenen Diagrammscheiben dienenden Deckel vorgesehen ist und welcher mit einem Zeiger als Anzeigemittel für die Geschwindigkeit und mit einem Streckenzählwerk ausgerüstet ist, wobei als Gehäuse für den Tachometer ein Gehäuse eines Fahrtschreibers der genannten Art Anwendung findet, in dem Gehäuse wenigstens die in einem Fahrtschreiber für die Geschwindigkeitsmessung und den Antrieb des Zeigers erforderlichen Mittel sowie das Streckenzählwerk angeordnet sind und dem Zeiger ein Zifferblatt zugeordnet ist. Weiterhin betrifft die Erfindung ein Verfahren zum Umrüsten eines Fahrtschreibers in einen Tachometer der obengenannten Art.

Einen Fahrtschreiber mit einem Tachometer wie er vorstehend beschrieben ist, zeigt die EP 077 994 A. Das heißt, der Fahrtschreiber gemäß der EP 077 994 A weist ein zylindrisches Einbaugehäuse und einen mit diesem gelenkig verbundenen Deckel auf, dessen Innenseite den als Aufzeichnungsträger dienenden Diagrammscheiben als Registrierunterlage dient und an dessen Außenseite den Fahrern zugeordnete Einstellknöpfe zur Eingabe von Arbeitszuständen, ein Schloß zum Verriegeln des Deckels sowie ein Streckenzählwerk sichtbar sind. Außerdem beinhaltet der Fahrtschreiber Mittel zum Messen von Geschwindigkeit, Drehzahl und Uhrzeit sowie einem Zifferblatt zugeordnete Zeiger zur Anzeige der gemessenen Werte.

Bekanntlich ist der Einbau von Fahrtschreibern nicht in allen Staaten gesetzlich vorgeschrieben und auch bei gesetzlichen Regelungen nicht für alle Kraftfahrzeug- insbesondere Nutzfahrzeug-Kategorien vorgesehen oder der Einbau ist bei ansonsten geltender Einbaupflicht, beispielsweise für Kommunalfahrzeuge, freigestellt. Hinzu kommt, daß in Fällen des freiwilligen Einbaus der Einbau von der subjektiven Beurteilung eines Fuhrparkleiters bestimmt wird.

Für die Fahrzeughersteller oder komplette Armaturentafeln fertigenden Zulieferer bedeutet diese Situation eine kostenintensive, kundenspezifische Ausrüstung von Armaturentafeln entweder mit Fahrtschreibern der oben genannten Art oder mit Tachometern, wobei letztere, wenn ein Fahrtschreiber nicht erforderlich ist oder nicht gewünscht wird, der Geschwindigkeitsanzeige wegen anstelle eines Fahrtschreibers vorgesehen werden müssen. Dabei sei noch erwähnt, daß die unmittelbare Verwendung eines üblichen, ebenfalls die -Geschwindigkeit anzeigenden Fahrtschreibers als Tachometer deshalb nicht möglich ist, weil der Fahrtschreiber, wenn er nicht als solcher gehandhabt wird, das heißt Diagrammscheiben eingelegt werden, konstant eine Fehlermeldung abgibt.

Aus Kostengründen wird der Hersteller von Armaturentafeln diese mit der größten, nämlich mit einer für den Einbau eines Fahrtschreibers erforderlichen Einbauöffnung versehen, so daß, da Tachometer mit einem den Einbaumaßen eines Fahrtschreibers entsprechenden Gehäuse handelsüblich in der Regel nicht zur Verfügung stehen, für den Einbau handelsüblicher Tachometer geeignete Halter sowie entsprechende Frontblenden erforderlich sind. Auf diese Weise sind aber auch die Voraussetzungen geschaffen, daß jederzeit ein Austausch des Tachometers gegen einen Fahrtschreiber in einer Kundendienstwerkstatt vorgenommen werden kann.

Daraus ergab sich die der vorliegenden Erfindung zugrunde liegende Aufgabe, den Bauteile- und Montageaufwand beim Umrüsten bzw. beim Einbau eines Tachometers in eine für den Einbau eines Fahrtschreibers ausgebildete Armaturentafel zu vereinfachen.

Die Lösung der Aufgabe beschreibt der Anspruch 1. Ein Verfahren zum Umrüsten eines Fahrtschreibers in einen Tachometer ist im Anspruch 2 aufgezeigt. Vorteilhafte Ausgestaltungen der Erfindung sind in den Unteransprüchen 3 und 4 beschrieben.

Der entscheidende Vorteil der Erfindung ist darin zu sehen, daß für beide Geräte, also für einen Fahrtschreiber sowie für einen Tachometer das gleiche Gehäuse verwendet wird somit auch für beide Geräte die gleichen, großen und gut lesbaren Anzeigemittel für die Geschwindigkeitsanzeige realisierbar sind. Vorteilhaft ist ferner, daß ein bis zu einer bestimmten höheren Ausbaustufe eines Fahrtschreibers hergestellter Tachometer in einer Kundendienstwerkstatt leicht zu einem Fahrtschreiber nachgerüstet werden kann oder bei einer Minimalausstattung insofern äußerst aufwandminimiert herstellbar ist, als ein solcher Tachometer aus Bauteilen eines Fahrtschreibers hergestellt werden kann. Das heißt, im letzteren Falle ergibt sich das größte Einsparungspotential. Erwähnenswert ist außerdem, daß in einem bestimmten Fertigungszustand der laufenden Fahrtschreiber-Produktion teilmontierte Fahrtschreiber abgezweigt und als Tachometer vervollständigt werden. Dabei können in einer höheren Fahrtschreiber-Ausbaustufe dem fertiggestellten Tachometer die für den Ausbau zu einem Fahrtschreiber noch fehlenden Bauteile als Nachrüstsatz mitgeliefert werden. Möglich ist außerdem, daß im Feld befindliche Fahrtschreiber um- bzw. rückgerüstet werden, so daß mit einer geringen Anzahl von Umbauteilen auf relativ einfache Weise, und zwar in einer Kundendienstwerkstatt vor Ort, die benötigten Tachometer geschaffen werden können. Da die Stückzahl der benötigten Tachometer gering ist, kann sich ein Fahrzeughersteller auf den Standpunkt stellen nur Fahrzeuge mit Fahrtschreibern auszuliefern und im Bedarfsfalle vor Ort die Fahrtschreiber in Tachometer umzurüsten. Denkbar ist auch, daß der in vorteilhafter Weise aus Bauteilen eines für die Verwendung von Diagrammscheiben als Aufzeichnungsträger ausgebildeten Fahrtschreibers hergestellte Tachometer, bei dem aufgrund seiner Fahrtschreiberabkunft die Anpassung an die Streckenimpulszahl mit einer hohen, nämlich der bei Fahrtschreibern üblichen Genauigkeit bei geöffnetem Deckel vorgenommen werden kann und Störungen der Streckenimpulsübertragung durch Pendeln des Zeigers angezeigt werden, mittels einer elektronische registrierenden, räumlich nicht zwingend im Sichtbereich des Fahrers anzubringenden Einheit zu einem Fahrtschreibersystem ergänzt wird, wobei Arbeitszeitdaten der Fahrer, sofern sie angezeigt werden bzw. abrufbar sein sollen, beispielsweise auf einem zentralen Display der Armaturentafel angezeigt werden können. Andererseits ist es naheliegend einem elektronischen Fahrtschreiber als Geschwindigkeitsanzeigegerät einen Tachometer der geschilderten Art zuzuordnen und damit die Fertigungsvorteile, die zusätzlichen Funktionen und die besonders große und unmißverständliche Zeigeranzeige des erfindun gsgemäßen Tachometers zu nutzen.

Von den Zeichnungen zeigen:
Figur 1 die Frontansicht eines aus Bauteilen eines Fahrtschreibers gemäß Figur 2 hergestellten Tachometers,
Figur 2 die Frontansicht eines üblichen Fahrtschreibers,

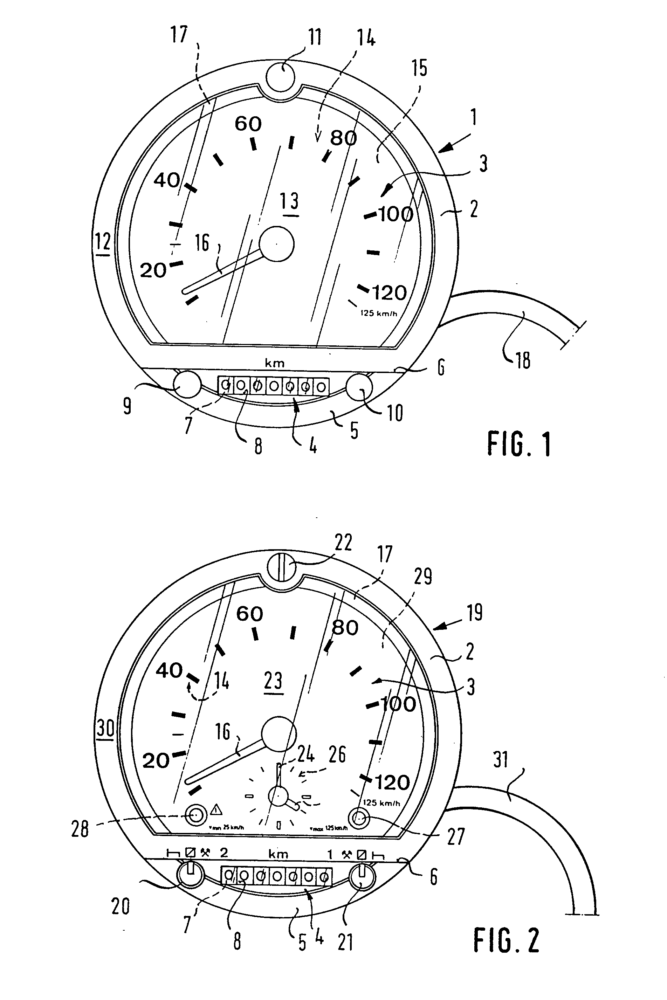

Der in Figur 1 dargestellte Tachometer 1 weist, indem er aus Bauteilen eines Fahrtschreibers gemäß Figur 2 hergestellt bzw. aus einer Um- oder Rückrüstung eines Fahrtschreibers entstanden ist, ein zylindrisches Einbaugehäuse auf, an welchem ein Deckel 2 mit einem flachen, topförmig ausgebildeten Gehäuse schwenkbar gelagert ist. Dabei ist die Frontfläche des Tachometers 1 nicht identisch mit der Frontfläche 3 des Deckels 2. Das heißt, ein Teil 4 der Frontfläche des Tachometers 1 wird von einem feststehenden Gehäuseansatz 5 gebildet. Eine frontseitige Trennfuge bzw. der frontseitige Schwenkspalt zwischen dem Deckel 2 und dem Gehäuseansatz 5 ist mit 6 bezeichnet.

Die Figur 1 zeigt ferner, daß in dem Gehäuseansatz 5 ein Streckenzählwerk 7 angeordnet und durch ein Fenster 8 beobachtbar ist. Mit 9 und 10 sind Öffnungen abdeckende Kappen bezeichnet. 11 stellt eine Blende dar, mit welcher ein den Deckel 2 zuhaltendes Schloß abgedeckt ist. Die Blende 11 kann als Plombe ausgebildet sein, und zwar vorzugsweise derart, daß an der Blende 11 ein dem Schlüssel des Schlosses entspreichender Schaft angeformt ist. Das Schloß ist in einem Frontring 12 aufgenommen, welcher mit dem Gehäuse des Deckels 2 rastend verbunden ist. Ferner ist mit dem Frontring 12 eine Glasscheibe 13 fest verbunden, die die Anzeigemittel, das heißt ein mit einer Skale 14 für die Geschwindigkeitsmeßwerte versehenes Zifferblatt 15 sowie einen der Skale 14 zugeordneter Zeiger 16 durchsichtig abdeckt. Mit 17 ist ein axial federnder Blendring bezeichnet, welcher zwischen dem Frontring 12 und einem im Deckel 2 befestigten nicht sichtbaren scheibenförmigen Lichtleiter, dem einerseits ein Reflektor andererseits ein Zifferblatt 15 zugeordnet sind, eingespannt ist. Ein Kabel 18 bündelt die Leitungen für die Stromversorgung des Tachometers 1 sowie dessen Signalleitungen für die Streckenimpulse und die Leitungen über die der Tachometer 1 zur Übertragung von Geschwindigkeitsmeßwerten, Streckenimpulsen und Störungsmeldungen mit einem elektronisch oder auf Diagrammscheiben aufzeichnenden oder in geeigneter Weise druckenden Registrieraggregat verbunden ist.

Im folgenden sei auf die Unterschiede des Tachometers 1 gegenüber dem in Figur 2 dargestellten Fahrtschreiber 19, aus welchem der Tachometer 1 durch Um- oder Rückrüsten hervorgegangen ist, näher eingegangen.

Mit 20 und 21 sind Einstellknöpfe bezeichnet, mit denen die Arbeitszustände der Fahrer in den Fahrtschreiber 19 eingebbar sind, mit anderen Worten, die betreffenden Registrierorgane des Fahrtschreibers 19 derart steuerbar sind, daß auf der Diagrammscheibe arbeitsarttypische Registrierungen erfolgen. Den Betätigungsknöpfen 20 und 21 sind zu diesem Zwecke Einstellwellen zugeordnet, die in dem feststehenden Gehäuseansatz 5 gelagert sind.

Durch ein im Deckel 2, der mittels eines Schlosses 22 mit dem Gehäuse des Fahrtschreibers 19 verriegelbar ist, vorgesehenes und mittels einer Glasscheibe 23 abgedecktes Fenster sind der Zeiger 16 und die Skale 14 für die Geschwindigkeitsmeßwerte sowie weitere Anzeigemittel 24, 25 und 26 für die analoge Darstellung der Uhrzeit beobachtbar. Mit 27 und 28 sind mittels Leuchtdioden gebildete Kontrollampen bezeichnet, von denen eine das Überschreiten eines bestimmten Geschwindigkeitswertes meldet und die andere nichtordnungsgemäße Registrierbereitschaft des Fahrtschreibers 19 signalisiert. Die Kontrollampen ragen durch den bereits erwähnten scheibenförmigen Lichtleiter, auf dem ein die Skalen 14 und 26 tragendes Zifferblatt 29 befestigt ist, hindurch. Der Rand des Zifferblattes 29 ist durch den Blendring 17 abgedeckt. Letzterer wird im Falle des Fahrtschreibers 19 mittels eines mit Arbeitszeitsymbolen bedruckten Frontringes 30, in dem die Glasscheibe 23 befestigt ist, auf dem das Zifferblatt 29 tragenden Lichtleiter verspannt. Mit 31 ist ein mit dem Kabel 18 des Tachometers 1 körperlich identisches Kabel bezeichnet, welches beispielsweise die Stromversorgung- und die Signalleitungen des Fahrtschreibers 19 bündelt. Dabei sind außer den Signalleitungen zwischen dem Fahrtschreiber 19 und dessen Streckenimpulsgeber auch solche zwischen dem Fahrtschreiber 19 und einem diesem zugeordneten passiven Aufnahmegerät für Fahrerdatenkarten oder einem weitgehend autark arbeitenden Arbeitszeiterfassungsgerät denkbar.

Der Vollständigkeit halber sei noch erwähnt, daß der dargestellte Fahrtschreiber 19 für die Verwendung von zwei dem Fahrer und dem Beifahrer zugeordneten Diagrammscheiben ausgerüstet und, daß das Uhrwerk für den Antrieb der Uhrzeiger 24 und 25 und der in Registrierposition parallel zur Frontfläche des Fahrtschreibers 19 sich befindenden Diagrammscheiben im Deckel 2 des Fahrtschreibers 19 angeordnet ist. Die den Diagrammscheiben zugeordneten Zentrier- und Mitnahmemittel sind bekanntlich an der Innenseite des Deckels 2 zugänglich, während sich die Antriebsmittel für die Registrierorgane hinter einer geeigneten Abdeckung im Gehäuse des Fahrtschreibers 19 befinden und durch geeignete Öffnungen in der Abdeckung in den Registrierraum durchgreifen. Dabei dient der Boden des Gehäuses des Deckels 2 einerseits als Registrierunterlage andererseits als Montageplatte für das Uhrwerk.

Nachfolgend sei die Erfindung anhand einer Um- bzw. Rückrüstung des vorstehend beschriebenen Fahrtschreibers 19 näher erläutert, wobei es belanglos ist, ob der betreffende Fahrtschreiber 19 der EG-Norm entspricht, das heißt für die gleichzeitige Verwendung von zwei Diagrammscheiben eingerichtet ist oder nur ein sogenanntes Einfahrergerät darstellt.

In einem ersten Schritt wird der mit dem Gehäuse des Deckels 2 verrastete Frontring 30, in welchem das Schloß 22 gelagert und die Glasscheibe 23 eingeklebt ist, abgezogen. Damit werden die Zeiger 24, 25 und 16 frei zugänglich und können ebenfalls abgezogen werden. Nach der Entnahme des als Federelement ausgebildeten Blendringes 17 kann nachfolgend der im Deckel 2 verrastete Lichtleiter bzw. die Lichtleiterbaugruppe entnommen werden. Die Lichtleiterbaugruppe wird im wesentlichen gebildet aus einem scheibenförmigen Lichtleiter, dem einerseits ein Reflektor andererseits das Zifferblatt 29 zugeordnet sind. Danach lassen sich die durch die Lichtleiterbaugruppe durchgreifenden Kontrollampen 27, 28 aus einer im Deckel 2 befestigten Leiterplatte auslöten und das Minuten- und das Stundenrohr des Uhrwerkes entfernen, was ohne Ausbau der sonstigen Uhrwerksteile möglich ist.

Als weiteren Schritt beim Umbau des Fahrtschreibers 19 zur Erzielung des Tachometers 1 wird die Lichtleiterbaugruppe mit einem neuen, geschlossenen Zifferblatt 15 versehen, auf dem ausschließlich Geschwindigkeitswerte skaliert sind. Nachfolgend wird die Lichtleiterbaugruppe in das Gehäuse des Deckels 2 eingesetzt, der Zeiger 16 auf die Zeigerwelle aufgesteckt, der Blendring 17 aufgelegt und ein Frontring 12, der nicht mit Arbeitszeitsymbolen eines Fahrtschreibers bedruckt ist, in dem aber ein Schloß gelagert und eine Glasscheibe 13 befestigt sind, aufgesteckt und mit dem Gehäuse des Deckels 2 verrastet.

Der Ausbau der mit Betätigungsknöpfen 20 und 21 versehenen Einstellwellen erfolgt bei geöffnetem Deckel 2 indem die Plombierung eines der axialen Sicherung der Einstellwellen dienenden Bauteils gelöst und das Bauteil entfernt wird. Danach lassen sich die Einstellwellen aus dem Gehäuseansatz 5 des Fahrtschreibers 19 frontseitig herausziehen. Die Lageröffnungen der Einstellwellen werden nachfolgend mittels geeigneter Kappen 9 und 10 verschlossen. Die Vervollständigung des Tachometers 1 erfolgt beim Einbau in ein Kraftfahrzeug, das heißt, nach dem Angleichen des Tachometers 1 an die vorliegende Streckenimpulszahl. Dabei erfolgt diese bei geöffnetem Deckel 2 in gleicher Weise wie bei Fahrtschreibern, vorzugsweise mittels einer Schalterbank. Nach erfolgter Einstellung wird der Deckel 2 des Tachometers 1 geschlossen und das im Frontring 12 gehalterte Schloß mittels einer Blende 11, die als Plombe ausgebildet sein kann versiegelt. Vorzugsweise ist an der Blende 11 ein dem Schlüssel des Schlosses entsprechender Schaft angeformt.

Der Vollständigkeit halber sei noch erwähnt, daß die Registrierorgane bzw. die Registrierstifte des Fahrtschreibers 19, die normalerweise auf einer Diagrammscheibe aufliegen, bei nicht eingelegter Diagrammscheibe in eine im Deckel 2 vorgesehene Nut eintauchen, den Grund der Nut aber nicht berühren. Das heißt, sie werden bei nichteingelegter Diagrammscheibe nicht beschädigt und sind bei einer späteren Wiederverwendung des Tachometers 1 als Fahrtschreiber 19 uneingeschränkt funktionsfähig.

Bei der zweiten Art und Weise zum erfindungsgemäßen Tachometer 1 zu gelangen, nämlich bei der Abzweigung aus der Fahrtschreiberproduktion und einer Ausrüstung gemäß dem Anspruch 1, kann auf die Montage der Registrierorgane und deren Antriebsmittel, das heißt auf die Registriermittel zur Aufzeichnung der Strecke, der Geschwindigkeit, der Arbeitszeiten und von Zusatzfunktionen des Fahrzeuges verzichtet werden, wobei die Antriebsmittel für das Steckenzählwerk 7 und die für den Geschwindigkeitszeiger 16 in Funktion bleiben müssen.

## Patentansprüche

1. Tachometer für Kraftfahrzeuge, welcher einen Einbau in eine in einem Armaturenbrett oder dergleichen Fahrzeugwand vorgesehene Öffnung gestattet, die für den Einbau eines Fahrtschreibers mit einem im wesentlichen zylindrischen Gehäuse und einem frontseitig aufklappbaren und mittels eines Schlosses mit dem Gehäuse verriegelbaren, dem Wechseln der in einem derartigen Fahrtschreiber als Aufzeichnungsträger vorgesehenen Diagrammscheiben dienenden Deckel vorgesehen ist und - welcher mit einem Zeiger als Anzeigemittel für die Geschwindigkeit und mit einem Streckenzählwerk ausgerüstet ist, wobei als Gehäuse für den Tachometer ein Gehäuse eines Fahrtschreibers der genannten Art Anwendung findet, in dem Gehäuse wenigstens die in einem Fahrtschreiber für die Geschwindigkeitsmessung und den Antrieb des Zeigers erforderlichen Mittel sowie das Streckenzählwerk angeordnet sind und dem Zeiger ein Zifferblatt zugeordnet ist,
**dadurch gekennzeichnet**,
daß auf dem Zifferblatt (15) ausschließlich Geschwindigkeitswerte skaliert sind,
daß die in dem frontseitigen Gehäuseansatz (5) des Fahrtschreibergehäuses vorgesehenen Lageröffnungen zur Durchführung und Lagerung von der Arbeitszeiteinstellung von Fahrer und Beifahrer dienenden, mit Betätigungsknöpfen (20, 21) versehenen Einstellwellen durch Kappen (9, 10) verschlossen sind und
daß dem Schloß (22) eine Blende (11) zugeordnet ist, welche angebracht wird, wenn bei dem in einem Fahrzeug eingebauten Tachometer (1), die bei geöffnetem Deckel (2) erfolgende Angleichung an die fahrzeugseitig gegebene Impulszahl/Streckeneinheit vorgenommen und der Deckel (2) nachfolgend geschlossen worden ist.

2. Verfahren zum Umrüsten eines Fahrtschreibers in einen Tachometer für Kraftfahrzeuge nach Anspruch 1,
**dadurch gekennzeichnet,**
daß ein Fahrtschreiber (19) der genannten Art umgerüstet wird, indem
- nach einem Abziehen des Frontringes (30) des Deckels (2) und der Entnahme der vorzugsweise mit dem Frontring (30) verbundenen Glasscheibe (23), des zwischen der Glasscheibe (23) und dem Zifferblatt (29) des Fahrtschreibers (19) liegenden Blendringes (17) sowie nach einem Abziehen der Uhrzeiger (24, 25) und des Geschwindigkeitszeigers (16) die das Zifferblatt (29) tragende Lichtleiterbaugruppe entnommen wird,
- das Minuten- und das Stundenrohr des Uhrwerkes entfernt werden,
- die der Geschwindigkeitswarnung und der Anzeige einer nichtordnungsgemäßen Registrierfunktion dienenden Kontrollampen (20, 21) aus einer im Deckel (2) befestigten Leiterplatte ausgelötet werden,
- die mit einem Zifferblatt (15), auf dem ausschließlich Geschwindigkeitswerte skaliert sind, versehene Lichtleiterbaugruppe eingesetzt wird,
- der Geschwindigkeitszeiger (16) aufgesetzt und der Blendring (17) eingelegt werden und
- der Deckel (2) durch Aufrasten eines nicht mit Arbeitszeitsymbolen eines Fahrtschreibers (19) versehenen Frontringes (12), mit welchem vorzugsweise eine Glasscheibe (13) fest verbunden ist, komplettiert wird
- nach einem bei aufgeklapptem Deckel (2) möglichen Lösen der Plombierung der der Arbeitszeiteinstellung von Fahrer und Beifahrerdienenden, mit Betätigungsknöpfen (20, 21) versehenen Einstellwellen, letztere durch frontseitiges Herausziehen entfernt und die Lageröffnungen der Einstellwellen durch Kappen (9, 10) verschlossen werden und indem
- dem Schloß (22) eine Blende (11) zugeordnet wird, welche angebracht wird, wenn bei dem in einem Kraftfahrzeug eingebauten Tachometer (1), die bei geöffnetem Deckel (2) erfolgende Angleichung an die fahrzeugseitig gegebene Impulszahl/Streckeneinheit vorgenommen und der Deckel (2) nachfolgend geschlossen worden ist.

3. Tachometer für Kraftfahrzeuge nach Anspruch 1,
**dadurch gekennzeichnet**,
daß an der Blende (11) ein Schaft angeformt ist, welcher dem dem Schloß (22) zugeordneten Schlüssel entspricht.

4. Tachometer für Kraftfahrzeuge nach Anspruch 3,
**dadurch gekennzeichnet**,
daß zwischen der Blende (11) und dem Schaft eine Sollbruchstelle ausgebildet ist.

## Claims

1. Speedometer for motor vehicles, which permits installation in an opening which is provided in a dashboard or similar vehicle wall and is provided for the installation of a tachograph with an essentially cylindrical casing and a cover which can be pivoted up at the front, locked to the casing by means of a lock and is used to change the diagram discs provided as recording media in such a tachograph, said speedometer being equipped with a pointer as display means for the velocity and with an odometer device, a casing of a tachograph of the aforesaid type being used as the casing for the speedometer, at least the means required for measuring the velocity and driving the pointer in a tachograph, as well as the odometer, being arranged in the casing, and a dial being assigned to the pointer, characterized in that velocity scale values are exclusively provided on the dial (15), in that the mounting openings provided in the front casing projection (5) of the tachometer casing, for passing through and mounting setting shafts which are used to set the working time of the driver and co-driver and are provided with activation knobs (20, 21) are closed off by means of caps (9, 10), and in that a front panel (11) is assigned to the lock (22) and is attached when, on a tachometer (1) installed in a vehicle, the adjustment to the pulse rate/distance unit set in the vehicle is performed with the cover (2) in the opened position and the cover (2) has subsequently been closed.

2. Method for retrofitting a tachograph into a speedometer for motor vehicles according to Claim 1, characterized in that a tachograph (19) of the aforesaid type is retrofitted by
- the light guide assembly which bears the dial (29) is removed after the front ring (30) of the cover (2) is pulled off and the glass plate (23), preferably connected to the front ring (30), of the front panel ring (17) which is located between the glass plate (23) and the dial (29) of the tachograph (19) is removed, and after the clock pointers (24, 25) and the velocity pointer (16) are removed,
- the cannon pinion of the clock mechanism is removed,
- the monitoring lamps (20, 21) which have the function of giving velocity warnings and displaying a recording function which is not in accordance with regulations are unsoldered from a circuit board mounted in the cover (2),
- the light guide assembly which is provided with a dial (15) on which velocity scale values are exclusively provided is inserted,
- the velocity pointer (16) is fitted on and the front panel ring (17) is inserted, and
- the cover (2) is completed by locking on a front ring (12) which is not provided with working time symbols of a tachograph (19) and to which preferably a glass plate (13) is permanently connected,
- after the lead sealing of the setting shafts which are used to set the working times of the driver and co-driver and are provided with activation knobs (20, 21) are released, which is possible with the lid (2) pivoted up, said setting shafts are removed by pulling them out of the front, and the mounting openings of the setting shafts are closed off by caps (9, 10), and in that
- a front panel (11) is assigned to the lock (22) and is attached when, on a tachometer (1) installed in a vehicle, the adjustment to the pulse rate/distance unit set in the vehicle is performed with the cover (2) in the opened position and the cover (2) has subsequently been closed.

3. Speedometer for motor vehicles according to Claim 1, characterized in that a shaft which corresponds to the key assigned to the lock (22) is formed onto the front panel (11).

4. Speedometer for motor vehicles according to Claim 3, characterized in that a predetermined break point is formed between the front panel (11) and the shaft.

## Revendications

1. Tachymètre pour véhicules automobiles pouvant être encastré dans une ouverture prévue dans un tableau de bord ou un autre panneau de véhicule semblable, laquelle est prévue pour l'encastrement d'un enregistreur de route avec un boîtier pour l'essentiel cylindrique et un couvercle rabattable du côté frontal et verrouillable, au moyen d'une serrure, avec ledit boîtier, servant au changement des disques de diagramme prévus comme supports d'enregistrement dans un tel enregistreur de route et qui est équipé d'une aiguille indicatrice comme moyen d'affichage pour la vitesse et d'un mécanisme de comptage de distances parcourues, le boîtier mis en oeuvre pour le tachymètre étant un boîtier d'un enregistreur de route du type susmentionné, dans ledit boîtier étant disposés au moins les moyens nécessaires dans un enregistreur de route pour la mesure de la vitesse et pour l'entraînement de l'aiguille indicatrice ainsi que le mécanisme de comptage de distances parcourues et un cadran étant associé à ladite aiguille indicatrice,
caractérisé par le fait
que le cadran (15) porte exclusivement une échelle des valeurs de vitesse,
que les ouvertures de palier prévues dans le segment de boîtier frontal (5) du boîtier de l'enregistreur de route pour laisser le passage et permettre le montage d'arbres de réglage servant au réglage de temps de travail de conducteurs et convoyeurs, équipés de boutons d'actionnement (20, 21), sont obturées par des bouchons (9, 10) et
qu'à la serrure (22) est associé un cache (11) qui sera mis en place lorsque l'adaptation à l'ensemble nombre d'impulsions/distances parcourues donné du côté du véhicule a été exécutée avec le couvercle (2) ouvert dans le tachymètre (1) installé dans un véhicule, et que ledit couvercle (2) aura ensuite été fermé.

2. Procédé pour la transformation d'un enregistreur de route en un tachymètre pour des véhicules automobiles selon la revendication 1,
caractérisé par le fait
qu'un enregistreur de route (19) du type susmentionné sera transformé en
- prélevant le sous-ensemble conducteur de lumière portant le cadran (29), après un retrait de l'anneau frontal (30) du couvercle (2) et le prélèvement, d'une part, de la vitre (23) assemblée, de préférence, avec ledit anneau frontal (30), d'autre part, du cache annulaire (17) situé entre ladite vitre (23) et le cadran (29) de l'enregistreur de route (19) ainsi qu'après un retrait des aiguilles indicatrices de l'heure (24, 25) et de l'aiguille indicatrice de la vitesse (16),
- enlevant le tube des minutes et le tube des heures du mécanisme horloger
- dessoudant, sur une platine à circuits imprimés fixée dans le couvercle (2), les lampes de contrôle (20, 21) servant d'avertisseurs de limitation de vitesse et à la signalisation d'une fonction d'enregistrement non réglementaire
- installant le sous-ensemble conducteur de lumière équipé d'un cadran (15) portant exclusivement une échelle des valeurs de vitesse,
- mettant en place l'aiguille indicatrice de vitesses (16) et insérant le cache annulaire (17) et
- complétant le couvercle (2) par encliquetage d'un anneau frontal (12) non pourvu des symboles de temps de travail d'un enregistreur de route (19) auquel anneau frontal (12) est rigidement reliée, de préférence, une vitre (13),
- otant, après suppression du plombage possible avec le couvercle (2) ouvert, par extraction frontale, les arbres de réglage pourvus de boutons d'actionnement (20, 21), servant au réglage des temps de travail de conducteurs et convoyeurs, et obturant les ouvertures de palier des arbres de réglage au moyen de bouchons (9, 10), et en
- associant à la serrure (22) un cache (11) qui sera mis en place lorsque, dans le tachymètre (1) encastré dans un véhicule, l'adaptation à l'ensemble nombre d'impulsions/distances parcourues donné du côté du véhicule, ayant lieu avec le couvercle (2) ouvert, a été exécutée et que ledit couvercle (2) aura ensuite été fermé.

3. Tachymètre pour véhicules automobiles selon la revendication 1,
caractérisé par le fait
que sur le cache (11) est formée une tige qui correspond à la clé associée à la serrure (22).

4. Tachymètre pour véhicules automobiles selon la revendication 3,
caractérisé par le fait
qu'entre le cache (11) et la tige est formé un point destiné à la rupture.
